(19) Europäisches Patentamt
European Patent Office
Office européen des brevets

(11) EP 1 657 285 A1

(12) **EUROPEAN PATENT APPLICATION**

(43) Date of publication:
**17.05.2006 Bulletin 2006/20**

(51) Int Cl.:
***C09D 11/00*** *(2006.01)*

(21) Application number: **05022870.9**

(22) Date of filing: **20.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.10.2004 JP 2004305527**

(71) Applicant: **FUJI PHOTO FILM CO., LTD.**
**Minami-Ashigara-shi, Kanagawa (JP)**

(72) Inventors:
- **Kasai, Seishi**
**Yoshida-cho**
**Haibara-gun**
**Shizuoka (JP)**
- **Hirato, Katsuyuki**
**Yoshida-cho**
**Haibara-gun**
**Shizuoka (JP)**

(74) Representative: **HOFFMANN EITLE**
**Patent- und Rechtsanwälte**
**Arabellastrasse 4**
**81925 München (DE)**

(54) **Ink composition for ink jet recording and ink jet recording method**

(57) An ink composition for ink jet recording, comprising: a dispersion medium; and a charged particle comprising a coloring material, wherein the ink composition comprises at least one basic carbon black as the coloring material.

*FIG. 1*

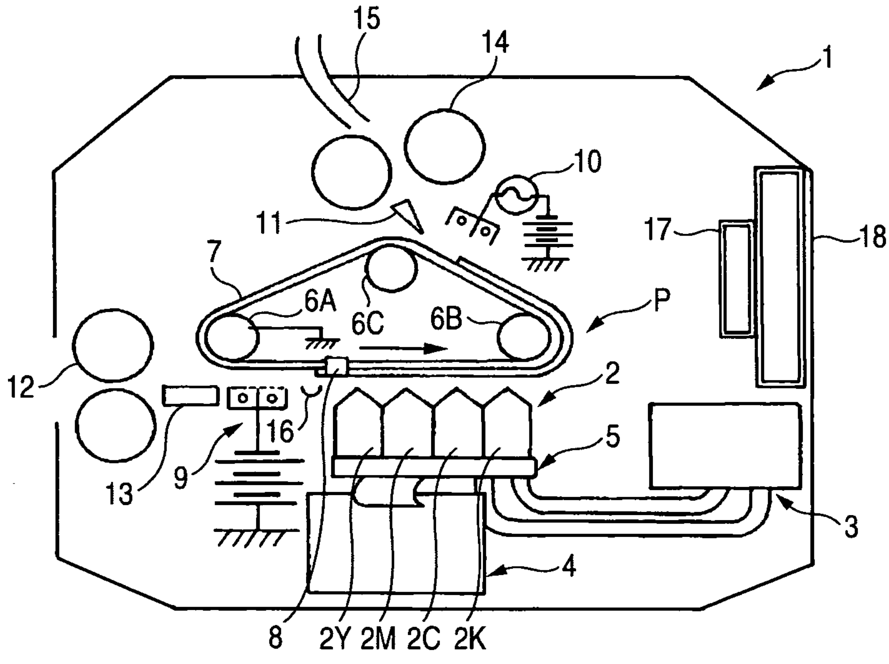


EP 1 657 285 A1

## Description

## Background of the Invention

### 1. Field of the Invention

The present invention relates to an ink composition for ink jet recording and an ink jet recording method using the same.

### 2. Description of the Related Art

In recent years, as a means of outputting digital signal of an image on a recording medium, e.g., paper, various systems have been developed, and an electrophotographic system, sublimation type and melting type heat transfer systems, and an ink jet system are exemplified as main systems. The electrophotographic system requires two stages of transfer processes of forming an electrostatic image on a photoreceptor by optical information and transferring a toner by electrostatic force, subsequently transferring the toner image to paper, so that the apparatus is large-scaled and requires high costs. The heat transfer systems are direct marking systems of contact type by heat and non-contact type, and since an ink ribbons are used, supports are left as wastes. On the other hand, the ink jet system is a direct inking system of ejecting ink droplets of from several pl to several ten pl from a nozzle and directly imaging on a recording medium, e.g., paper, and the apparatus is inexpensive and does not leave wastes, so that the ink jet system is superior to the former two systems.

The ink jet systems include a system of rapidly heating ink and ejecting ink droplets by the expansion and contraction of generated bubbles, a system of ejecting ink droplets by using ceramic that is deformed by the application of voltage, and an electrostatic ink jet system of ejecting ink droplets containing charged particles by utilizing electrostatic field (refer to U.S. Patent 6,158,844 and Japanese Patent 3315334). The method of ejecting ink droplets by heat or mechanical pressure cannot correctly land ink droplets on a desired point of a recording medium due to distortion of ink nozzles and convection of air. Further, since the volume of an ink droplet is mostly occupied by a solvent, blurring or tearing of images on the spot of the recording medium where droplets are landed is liable to occur.

On the other hand, since the electrostatic ink jet system controls the landing spot of ink droplets by electrostatic field, it is possible to correctly land ink droplets on a desired point of a recording medium. Further, electrostatic force is hardly applied to the solvent, so that ink droplets are ejected in the form that charged particles to which electrostatic force is applied are concentrated, and tearing or blurring of images after landing on a recording medium is difficult to occur. Accordingly, the electrostatic ink jet system can form precise dots, and so the system is effective as a means of forming a high quality image. As the ink composition for use in the electrostatic ink jet system, ink compositions comprising a solvent and charged particles containing at least a coloring material are generally used (refer to U.S. Patent 5,952,048 and JP-A-8-291267).

The related-art black ink compositions using carbon black as the coloring material are not sufficient in desired positive charge generation due to the negative charge generation on the surface of particles by the dissociation of acidic groups (carboxyl groups) of the particle surfaces, and, in particular in an electrostatic ink jet system that necessitates a quantity of electric charge on the particle surfaces in a high level, there is a drawback that stronger electrostatic force is applied to larger particles having greater surface area and a greater quantity of electric charge on the particle surface. Therefore, when the related-art inks that are insufficient in the control of particle size and electric charge density of particle surfaces are used, the responsibility at the time of ejection is inferior, and larger particles are preferentially ejected, so that particles having a smaller quantity of electric charge remain with the lapse of ejection time, the ejection of ink droplets becomes difficult, and it becomes hard to perform stable ejection continuously for a long period of time.

In general, it is preferred that dispersion media for use in the electrostatic ink jet system have high electric resistance, so that solvents having low polarity are mainly preferably used as the dispersants. However, if electric charge of particles is insufficient in the dispersion media, the thickness of the electric double layers formed around the charged particles is short, and the dispersion stabilizing effect by electrostatic repulsion is small. Therefore, the effect of stably dispersing the particles in the dispersion media without agglomeration of the particles is poor, so that when the ink composition is preserved for a long period of time, the particles are agglomerated to each other, and the average particle size is liable to greatly increase. When such inks are used in the electrostatic ink jet system, clogging of pipeline and reduction of the tone of formed images are generated. Therefore, inks having high dispersion stability free of the agglomeration of charged particles even by the long term preservation have been demanded.

## Summary of the Invention

The invention has been done with the objects of stable use of an ink composition for long hours in the electrostatic

ink jet system, and maintaining the dispersion stability of charged particles for a long period of time, not to speak of initial stage performance, thus the invention provides an ink composition for ink jet recording capable of forming high quality images for long hours and having preservation stability for a long period of time, and provides an ink jet recording method.

As a result of earnest studies to achieve the above objects by the present inventor, it has been found that stable, constant and continuous droplet ejection in long hour ink jet recording becomes possible by using basic carbon black, in particular basic carbon black obtained by decreasing the carboxyl groups on the surface thereof as the coloring material of a black ink composition, and high quality images not accompanied by ejection failure and free of the reduction of density and blur of ink can be formed, thus the invention has been achieved.

That is, the invention is as follows.

(1) An ink composition for ink jet recording comprising a dispersion medium, and a charged particle containing at least a coloring material, wherein the ink composition contains at least one basic carbon black as the coloring material.
(2) The ink composition for ink jet recording as described in the above item (1), wherein the basic carbon black is basic carbon black obtained by decreasing the carboxyl groups on the surface of carbon black by surface treatment.
(3) An ink jet recording method of ejecting ink droplets by an ink jet recording system utilizing electrostatic field with the ink composition as described in the above item (1) or (2).

**Brief Description of the Drawings**

Fig. 1 is a general view typically showing an example of ink jet recording apparatus for use in the invention;
Fig. 2 is an oblique view showing the constitution of the ink jet head of ink jet recording apparatus for use in the invention (for simplification, the edge of the guard electrode at each ejecting section is not shown); and
Fig. 3 is the cross section of side view of Fig. 2 showing the state of the distribution of charged particles in a case where a plurality of ejecting sections of the ink jet head are used (corresponding to the view X-X in Fig. 2).

G denotes jetted ink droplets; P denotes a recording medium; Q denotes an ink flow; R denotes charged particles; 1 denotes an ink jet recording apparatus; 2, 2Y, 2M, 2C, 2K denote jet heads; 3 denotes an ink circulatory system; 4 denotes a head driver; 5 denotes position controlling means; 6A, 6B, 6C denote carrier belt stretching rollers; 7 denotes a carrier belt; 8 denotes carrier belt position detecting means; 9 denotes electrostatic suction means; 10 denotes destaticizing means; 11 denotes mechanical means; 12 denotes a feed roller; 13 denotes a guide; 14 denotes image fixing means; 15 denotes a guide; 16 denotes recording medium position detecting means; 17 denotes an exhaust fan; 18 denotes a solvent vapor adsorbing material; 38 denotes an ink guide; 40 denotes a supporting bar; 42 denotes an ink meniscus; 44 denotes an insulating layer; 46 denotes a first ejection electrode; 48 denotes an insulating layer; 50 denotes a guard electrode; 52 denotes an insulating layer; 56 denotes a second ejection electrode; 58 denotes an insulating layer; 62 denotes a floating conductive plate; 64 denotes a covering film; 66 denotes an insulating member; 70 denotes an ink jet head; 72 denotes an ink channel; 74 denotes a substrate; 75, 75A, 75B denote openings; 76, 76A, 76B denote ejecting sections; 78 denotes an ink guide part.

**Detailed Description of the Invention**

The invention is described in further detail below.

The ink composition according to the invention comprises at least charged particles containing at least a coloring material and a dispersion medium.

Coloring material:

As the coloring material (pigment) for use in the black ink composition according to the invention, at least one basic carbon black is used.

When carbon black particles are dispersed in ion exchange water having pH of 7 and pH at 25°C is measured with a pH meter, carbon black that shows a pH value of 7 or higher is defined as "basic carbon black" in the invention.

As described in Kino Zairyo (Functional Materials), Vol. 20, No. 7, p. 42 (2000), most carbon blacks generally used have acidic groups, e.g., carboxyl groups, on the surface and show acidity, but various basic carbon blacks are also developed to cope with various necessary uses.

As the methods of manufacturing basic carbon blacks for use in the invention from acidic carbon blacks, 1) a method of surface-treating the hydroxyl groups, carboxyl groups on the surfaces of carbon black particles with a coupling agent (a silane coupling agent, a titanium coupling agent, etc.) containing a basic group (e.g., an amino group, etc.), 2)

a method of coating the surfaces of carbon black particles with a basic resin, 3) a method of graphitizing the surfaces of carbon black particles, and further coating the surfaces with a basic resin, and 4) a method of neutralizing with an alkali aqueous solution (e.g., sodium hydroxide, potassium hydroxide, etc.) are exemplified. Of these methods, methods 1), 2) and 3) are suitable for the object of the invention and preferred, and methods 1) and 3) are more preferred, but manufacturing methods are not restricted to these methods.

It is possible to make the basic carbon black for use in the invention by decreasing the carboxyl groups on the surfaces of carbon black particles by these surface-treating methods. The reduction of the carboxyl groups on the surfaces of carbon black particles can be confirmed by the reduced value of the peak of carboxyl groups of infrared absorption spectrum (IR) of carbon black (from 1,720 to 1,730 $cm^{-1}$) before and after treatment.

As commercially available basic carbon blacks for use in the invention, Carbon Black (C.B. ) #2300, #980, #960, #950, #900, #850, MCF88, #750B, #650, #52, #47, #45, #45L, #44, #40, #33, #32, #30, #25, #20, #5, CF9, #95, #85, #260, #4000B and #4350B (manufactured by Mitsubishi Chemical Corporation), REGAL330R, REGAL300R, REGAL350R, REGAL250R, REGAL99R, ELFTEX415, ELFTEX8, MONARCH460 and MONARCH280 (manufactured by Cabot Co., Ltd.) are exemplified.

The particle size of the carbon blacks for use in the invention is from 1 to 1,000 nm as a primary particle size, preferably from 2 to 500 nm, and more preferably from 2 to 200 nm.

It is preferred to use fundamentally one kind of pigment per one color in the point of simplicity of ink manufacture, but two or more kinds of pigments can also be used in combination according to cases, e.g., for the adjustment of hue, such as the mixture of phthalocyanine with carbon black for Chinese ink. Pigments that are surface-treated by well-known methods, e.g., rosin treatment, can also be used.

The content of a coloring material in all the ink composition is preferably in the range of from 0.1 to 50 mass%. The content of a coloring material of 0.1 mass% or more suffices the amount of a coloring material to provide satisfactory coloring in the printed matter, and when the content is 50 mass% or less, the particles containing the coloring material can be well dispersed in a dispersion medium. The content of a coloring material is more preferably from 1 to 30 mass%.

Dispersion medium:

The dispersion medium for use in the invention is preferably a dielectric liquid having high electrical resistivity, specifically electrical resistivity of $10^{10}$ $\Omega$ cm or higher. If a dispersion medium having low electrical resistivity is used, electrical continuity occurs between contiguous recording electrodes, so that such a dispersion medium is not preferred for the invention. The dielectric constant of a dielectric liquid is preferably 5 or less, more preferably 4 or less, and still more preferably 3.5 or less. When the dielectric constant of a dielectric liquid is in this range, electric field effectively acts upon the charged particles in the dielectric liquid and so preferred.

As dispersion media, straight chain or branched aliphatic hydrocarbon, alicyclic hydrocarbon, aromatic hydrocarbon, halogen substitution products of these hydrocarbons, and silicone oil are used in the invention. For example, hexane, heptane, octane, isooctane, decane, isodecane, decalin, nonane, dodecane, isododecane, cyclohexane, cyclooctane, cyclodecane, toluene, xylene and mesitylene are exemplified. Specifically, Isopar-C, Isopar-E, Isopar-G, Isopar-H, Isopar-L, and Isopar-M (Isopar is the trade name of Exxon), Shellsol 70 and Shellsol 71 (Shellsol is the trade name of Shell oil Company), Amsco OMS and Amsco 460 solvents (Amsco is the trade name of Spirits Co.), and KF-96L (trade name, manufactured by Shin-Etsu Chemical Co., Ltd., Silicone Division) can be used alone or as mixture. The content of dispersion medium in all the ink composition is preferably from 20 to 99 mass%. When the content of a dispersion medium is 20 mass% or more, the particles containing a coloring material can be well dispersed in the dispersion medium, and the content of 99 mass% or less can suffice the content of a coloring material.

Covering agent:

In the invention, coloring materials such as pigments may be directly dispersed (to be made particles) in a dispersion medium or may be dispersed (to be made particles) after being covered with a covering agent. By dispersing a coloring material (making fine particles) in the state of being covered with a covering agent, the electric charge of the coloring material is masked and desired charge characteristics can be obtained, further, the difference in dispersion stabilities according to the kinds of coloring materials is nullified, whereby equal dispersion stability can be obtained. In addition, by covering the surfaces of pigment particles having large surface areas and liable to form larger agglomerates, the particles are prevented from forming agglomerates and the tendency of polydispersion of particle size distribution can be restrained. In the invention, after ink jet recording on a recording medium, it is preferred for the recording medium to be subjected to fixation with a heating means such as a heat roller, by which the covering agent is melted and fixation is efficiently effected.

As the examples of covering agents, e.g., rosins, phenolic resin, rosin-modified phenolic resin, alkyd resin, (meth) acrylic polymer, polyurethane, polyester, polyether, polyamide, polyethylene, polybutadiene, polystyrene, polyvinyl acetate, an acetal-modified product of polyvinyl alcohol, and polycarbonate are exemplified. Of these covering agents, from the easiness of formation of particles, polymers having a weight average molecular weight of from 2, 000 to 1,000,000, and the degree of polydispersion (weight average molecular weight/number average molecular weight) of the range of from 1.0 to 5.0 are preferred. Further, from the easiness of fixation, polymers having any one of a softening point, a glass transition point and a melting point of from 40 to 120°C are preferred.

The polymers especially preferably used in the invention as the covering agent are polymers containing at least any one of the constitutional units represented by the following formulae (1) to (4) .

(1) 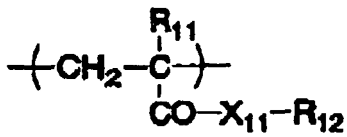

(2) 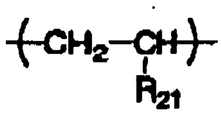

(3) 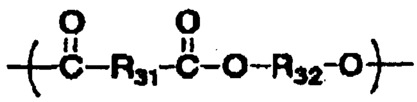

(4) 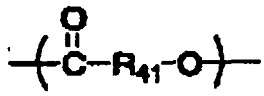

In the above formulae, $X_{11}$ represents an oxygen atom or -N ($R_{13}$) -: $R_{11}$ represents a hydrogen atom or a methyl group; $R_{12}$ represents a hydrocarbon group having from 1 to 30 carbon atoms; $R_{13}$ represents a hydrogen atom or a hydrocarbon group having from 1 to 30 carbon atoms; $R_{21}$ represents a hydrogen atom or a hydrocarbon group having from 1 to 20 carbon atoms; and $R_{31}$ , $R_{32}$ and $R_{41}$ each represents a divalent hydrocarbon group having from 1 to 20 carbon atoms; and the hydrocarbon groups represented by $R_{12}$, $R_{21}$, $R_{31}$, $R_{32}$ and $R_{41}$ may have an ether bond, an amino group, a hydroxyl group or a halogen substituent.

A polymer containing a constitutional unit represented by formula (1) can be obtained by radical polymerization of a corresponding radical polymerizable monomer by known methods. As the radical polymerizable monomers to be used, (math)acrylic esters, e.g., methyl (meth) acrylate, ethyl (meth) acrylate, propyl (meth) acrylate, butyl (meth) acrylate, hexyl (meth)- acrylate, octyl (meth)acrylate, 2-ethylhexyl (meth)acrylate, dodecyl (meth)acrylate, stearyl (meth)acrylate, cyclohexyl (meth)acrylate, phenyl (meth)acrylate, benzyl (meth)acrylate, and 2-hydroxyethyl (meth)acrylate; and (meth) acrylamides, e.g., N-methyl(meth)acrylamide, N-propyl(meth)acrylamide, N-phenyl(meth)acrylamide, and N,N-dimethyl (meth) acrylamide are exemplified.

A polymer containing a constitutional unit represented by formula (2) can be obtained by radical polymerization of a corresponding radical polymerizable monomer by known methods. As the radical polymerizable monomers to be used, e.g., ethylene, propylene, butadiene, styrene and 4-methylstyrene are exemplified.

A polymer containing a constitutional unit represented by formula (3) can be obtained by dehydration condensation of a corresponding dicarboxylic acid, or acid anhydride and diol by known methods. As the dicarboxylic acids to be used, succinic anhydride, adipic acid, sebacic acid, isophthalic acid, terephthalic acid, 1,4-phenylenediacetic acid and diglycolic acid are exemplified. As the diols to be used, ethylene glycol, 1,2-propanediol, 1,3-propanediol, 1,4-butanediol, 1,6-hexanediol, 1,10-decanediol, 2-butene- 1,4-diol, 1,4-cyclohexanediol, 1,4-cyclohexanedimethanol, 1,4-benzenedimethanol, and diethylene glycol are exemplified.

A polymer containing a constitutional unit represented by formula (4) can be obtained by dehydration condensation of a corresponding carboxylic acid having a hydroxyl group by known methods, or by ring opening polymerization of a corresponding cyclic ester of a carboxylic acid having a hydroxyl group by known methods. As the carboxylic acids having a hydroxyl group or cyclic esters thereof to be used, 6-hydroxyhexanoic acid, 11-hydroxyundecanoic acid, hydroxybenzoic acid, and ε-caprolactone are exemplified.

The polymers containing at least any one of the constitutional units represented by formulae (1) to (4) may be homopolymers of the constitutional units represented by formulae (1) to (4), or the polymers may be copolymers with other constitutional units. These polymers may be used alone as the covering agents or two or more of these covering agents may be used in combination.

The content of the covering agent in the total ink composition is preferably in the range of from 0.1 to 40 mass%. The content of 0.1 mass% or more is sufficient as the content of the covering agent and sufficient fixation can be obtained, and when the content is 40 mass% or less, good particles containing a coloring material and a covering agent can be formed.

Dispersant:

In the invention, a mixture of a coloring material, an electric charge adjustor described later, and a covering agent is dispersed (made particles) in a dispersion medium, and it is preferred to use a dispersant to inhibit particles from precipitating.

The examples of the dispersants include surfactants typified by sorbitan fatty acid esters, e.g., well-known sorbitan monooleate, and polyethylene glycol fatty acid esters, e.g., polyoxyethylene distearate are exemplified.

The dispersants especially preferably used in the invention are graft polymers comprising amain chain portion and a side chain portion of a graft chain, wherein the main chain portion has at least any of an acidic group and a salt obtained by neutralizing the acidic group. That is, strong acid-base interaction or electrostatic interaction is exhibited between the main chain portion and the charged particles by the main chain portion having an acidic group or a salt obtained by neutralizing the acidic group, as a result the adsorption force of the main chain portion onto the charged particles increases. By this structure, the dispersion stability of charged particles is improved and the preservation stability of the dispersion for a long period of time increases.

By using a proper amount of a graft polymer whose main chain portion has an acidic group or a salt obtained by neutralizing the acidic group as dispersant in manufacturing an ink composition, an ink composition having a narrow particle size distribution can be obtained. In the manufacture of an ink composition in the invention, it is preferred to use a kneader, a dissolver, a mixer, a high speed disperser, a sand mill, a roll mill, a ball mill, an attritor, and a beads mill at the same time for blending and dispersing (making fine particles) a coloring material, a covering agent and a dispersant. At this time, when too much an amount of dispersant is added, small size particles are liable to be formed, so that the particle size distribution of the obtained ink becomes polydispersion.

Since the quantity of electric charge of the surface of a charged particle is dependent upon the surface area of the particle, such ink that is polydispersed in particle size distribution varies widely in the quantity of electric charge of charged particles and stable ejection for long hours is difficult. According to the invention, by using a graft polymer having an acidic group or a salt obtained by neutralizing the acidic group on the main chain portion as dispersant, the adsorption force of the dispersant onto the charged particles increases, so that a desired particle size can be obtained with a smaller addition amount. Thus, an ink composition comprising uniformly charged particles of uniform particle size distribution can be obtained, and it becomes possible to eject ink droplets stably for a long period of time.

The graft polymers that are preferably used as the dispersants in the invention are polymers having a graft chain as the side chain, preferably polymers containing graft chain of polymer component having a weight average molecular weight of 500 or more as the side chain, and having a weight average molecular weight of 1,000 or more.

In the invention, the acidic group on the main chain portion means a proton donating functional group having pKa of 14 or less, and the salt obtained by neutralizing the acidic group is a functional group obtained by making an ion pair of the acidic group by a base, or neutralizing the acidic group by the pair component.

Preferably the functional group is a functional group in which conjugate base $-Y^{r-}$ and cationic radical $Z^{s+}$ are forming a covalent bonding or an ion pair represented by the following formula (5)

$$-Y^{r-} \cdot (Z^{s+})_t \qquad (5)$$

wherein r = 1 or 2, and r = sxt.

In formula (5), $-Y^{r-}$ represents an $-SO_3^-$, $-OSO_3^-$, $-CO_2^-$, $-C_6H_4-O^-$, $-PO_3^{2-}$ or $-OPO_3^{2-}$ group; $Z^{s+}$ represents a hydrogen ion ($H^+$), an alkaline (earth) metal ion, onium ions, e.g., an ammonium ion, a sulfonium ion, a phosphonium ion, etc., or a heterocyclic compound ion, specifically alkaline (earth) metal ions, e.g., a sodium ion, a potassium ion, a lithium ion, a calcium ion, a barium ion, etc., (mono-, di-, tri-, tetra-)- methylammonium, (mono-, di-, tri-, tetra-) ethylammonium, (mono-, di-, tri-, tetra-)-n-butylammonium, (mono-, di-, tri-, tetra-)methoxyammonium, (mono-, di-, tri-, tetra-) phenylammonium, phenyldimethylammonium, diphenylmethylammonium, morpholinium, n-methylmorpholinium,

dimethylethanolammonium, methyldiethanolammonium, (mono-, di-, tri-)ethanvlamine, trihydroxymethylamine, dihydroxymethylamine, monohydroxymethylamine, piperidine-protonated ammonium, (mono-, di-, tri-)methylsulfonium, triethylsulfonium, tri-n-butyl- sulfonium, (mono-, di-, tri-, tetra-)methylsulfonium, tetraethylsulfonium, tetra-n-butylphosphonium, (mono-, di-, tri-, tetxa-)phenylphosphonium, pyridinium, etc., are exemplified.

The graft polymer having an acidic group or a salt obtained by neutralizing the acidic group on the main chain portion is a graft polymer in which the main chain portion has an acidic group or a salt obtained by neutralizing the acidic group, and only one kind of an acidic group or a salt obtained by neutralizing the acidic group may be contained in the main chain portion, or a plurality of kinds may be contained.

The graft polymers preferably used in the invention are polymers containing at least a constitutional unit represented by the following formula (6) and a constitutional unit represented by the following formula (7), and having a weight average molecular weight of 1,000 or more.

(6) 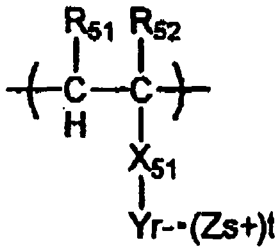

(7) 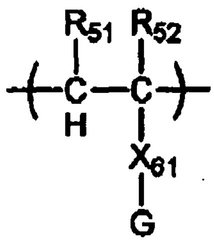

Symbol $-Y^{r-}$ $(Z^{s+})_t$ in formula (6) has the same meaning as in formula (5). Formula (6) constitutes the main chain portion and G in formula (7) constitutes the graft portion.

In formulae (6) and (7) , $R_{51}$, $R_{52}$, $R_{61}$ and $R_{62}$, which may be the same or different, each represents a hydrogen atom or a methyl group.

$X_{51}$ represents a single bond, or a hydrocarbon group having from 1 to 100 carbon atoms which may have a substituent. The hydrocarbon group may have a branched structure, and an ether bond, an ester bond, an amido bond, or a carbamate bond may be contained in the hydrocarbon group. The functional group $-Y^{r-}$. $(Z^{\varepsilon+})$, t represented by formula (5) may be contained only one in the constitutional unit, or a plurality of the groups may be contained.

$X_{61}$ represents a single bond, or a divalent linking group comprising from 2 to 50 atoms in total selected from C, H, N, O, S and P.

G represents a polymer component containing at least a constitutional unit represented by the following formula (8) having a weight average molecular weight of 500 or more, or represents a polydimethylsiloxane group having a weight average molecular weight of 500 or more.

(8) 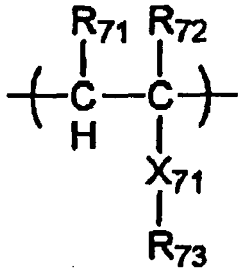

In formula (8) , $R_{71}$ and $R_{72}$, which may be the same or different, each represents a hydrogen atom or a methyl group.

$R_{73}$ represents a hydrogen atom or a hydrocarbon group having from 1 to 30 carbon atoms which may have a substituent. The hydrocarbon group represented by $R_{73}$ may contain an ether bond, an ester bond, an amido bond, a carbamate bond, an amino group, a hydroxyl group or a halogen substituent.

$X_{71}$ represents a single bond, or a divalent linking group comprising from 2 or more kinds of atoms selected from C, H, N, O, S and P, and comprising atoms in total of 50 or less.

The total atoms of $R_{73}$ are preferably more than the total atoms of $R_{53}$ in the point of ink ejection stability.

The graft polymers preferably used in the invention can be obtained by polymerizing a radical polymerizable monomer corresponding to formula (6) and a radical polymerizable macromonomer corresponding to formula (7) with a well-known radical polymerization initiator. The monomer corresponding to formula (6) is a monomer represented by the following formula (6M) , and the macromonomer corresponding to formula (7) is a macromonomer represented by the following formula (7M). Of the monomers represented by formula (6M) and formula (7M), one monomer respectively may be copolymerized, or a plurality of monomers respectively may be copolymerized.

(6M)

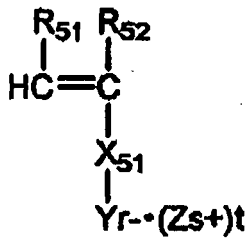

(7M)

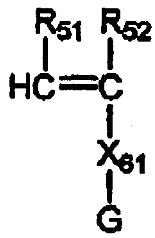

Each symbol in formulae (6M) and (7M) is the same as each symbol in formulae (6) and (7).

As the monomers represented by formula (6M), e.g., radical polymerizable monomers having a carboxyl group, e.g., (meth)acrylic acid, 2-carboxyethyl (meth)acrylate, 2-(meth)-acryloyloxyethyl phthalate, 2-(meth)acryloyloxyethyl succinate, styrenecarboxylic acid, maleic acid, itaconic acid, or fumaric acid, radical polymerizable monomers having a sulfonic acid group, e.g., (meth)acrylamido-2-methylpropane- sulfonic acid, 2-(meth)acryloyloxyethylsulfonic acid, or styrenesulfonic acid, radical polymerizable monomers having a phosphoric acid group, e.g., ethylene glycol (meth) acrylate phosphate or styrenephosphoric acid, monomers obtained by making ion pair of the acidic groups in these monomers with amines, sulfides, phosphines, or heterocyclic compounds, and monomers obtained by neutralizing the acidic groups in these monomers with the pair component of ammonium salt, sulfonium salt, or phosphonium salt are exemplified.

As the amines, sulfides, phosphines, and heterocyclic compounds above, e.g., amines such as (mono-, di-, tri-)-methylamine, triethylamine, tri-n-butylamine, (mono-, di-, tri-)phenylamine, phenyldimethylamine, diphenylmethylamine, morpholine, n-methylmorpholine, dimethylethanolamine (DMEA), methyldiethanolamine, (mono-, di-, tri-)ethanolamine, hydroxymethylamine, dihydroxymethylamine, monohydroxymethylamine, and piperidine, and heterocyclic compounds such as pyridine are exemplified.

As the pair components of ammonium salt, sulfonium salt, and phosphonium salt, alkaline (earth) metal hydroxides, e.g., sodium hydroxide, potassium hydroxide, lithium hydroxide, calcium hydroxide, and barium hydroxide, ammonium hydroxides, e.g., (mono-, di-, tri-, tetra-)methylammonium hydroxide, tetra-n-butylammonium hydroxide, tetramethoxyammonium hydroxide, and (mono-, di-, tri-, tetra-)phenylammonium, sulfonium hydroxides, e.g., (mono-, di-, tri-)methylsulfonium hydroxide, triethylsulfonium hydroxide, and tri-n-butyl- sulfonium hydroxide, and phosphonium hydroxides, e.g., (mono-, di-, tri-, tetra-)methylphosphonium hydroxide, tetraethyl- phosphonium hydroxide, tetra-n-butylphosphonium hydroxide, and (mono-, di-, tri-, tetra-)phenylphosphonium hydroxide are exemplified.

The macromonomer represented by formula (7M) is a polymer having radical polymerizable functional groups

at the terminals obtained by polymerizing a radical polymerizable monomer corresponding to formula (8) represented by the following formula (8M) in the presence of a chain transfer agent, according to necessity, and introducing radical polymerizable functional groups to the terminals of the obtained polymer.

The macromonomer represented by formula (8M) has a weight average molecular weight of from 500 to 500,000, and macromonomers having the degree of polydispersion (weight average molecular weight/number average molecular weight) of from 1.0 to 7.0 are preferred. The macromonomer represented by formula (8M) may be polydimethylsiloxane having radical polymerizable functional groups at the terminals.

(8M)

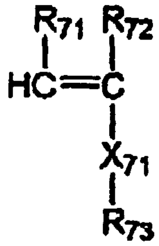

Each symbol in formula (8M) has the same meaning as each symbol in formulae (8).

As the monomers represented by formula (8M), (meth) acrylic esters, e.g., methyl (meth) acrylate, ethyl (meth) acrylate, propyl (meth)acrylate, butyl (meth)acrylate, hexyl (meth)acrylate, octyl (meth)acrylate, 2-ethylhexyl (meth) acrylate, cyclohexyl (meth) acrylate, dodecyl (meth) - acrylate, stearyl (meth) acrylate, phenyl (meth) acrylate, benzyl (meth) acrylate, and 2-hydroxyethyl (meth)acrylate; (meth)acrylamides, e.g., N-methyl(meth)acrylamide, N-propyl-(meth)acrylamide, N-phenyl(meth)acrylamide and N, N-dimethyl- (meth)acrylamide; styrenes, e.g., styrene, methylstyrene, chlorostyrene, and methoxystyrene; hydrocarbons, e.g., 1-butene; vinyl acetates, vinyl ethers, and vinylpyridines are exemplified.

The graft polymers having a salt obtained by neutralizing an acidic group on the main chain portion that can be preferably used in the invention can also be obtained by polymerizing a radical polymerizable monomer having an acidic group represented by formula (6M) and a radical polymerizable macromonomer represented by formula (7M) with a well-known radical polymerization initiator, and making an ion pair of the acidic groups in the obtained polymer with a base, e.g., amines or heterocyclic compounds, or by neutralizing the acidic groups in the obtained polymer with the pair component of ammonium salt, sulfonium salt, or phosphonium salt.

The graft polymers preferably used in the invention as dispersant may have constitutional units represented by formulae (6) and (7) alone, or may contain other constitutional units. As the specific examples of the graft polymers that are preferably used in the invention, polymers represented by the following structural formulae (BZ-1) to (BZ-13) are exemplified, but the invention is not limited thereto.

[BZ-1]

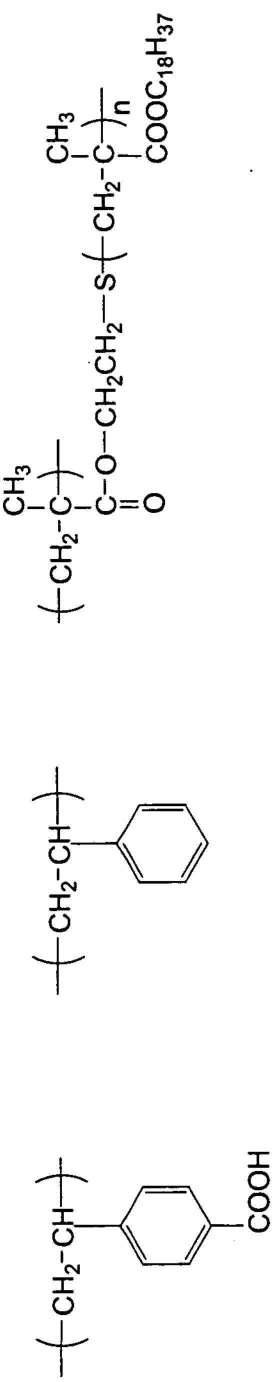

55 wt%

30 wt%

15 wt%

[BZ-2]

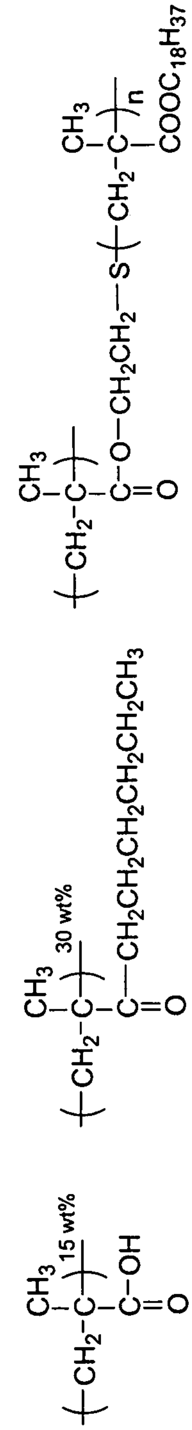

55 wt%

30 wt%

15 wt%

[BZ-3]

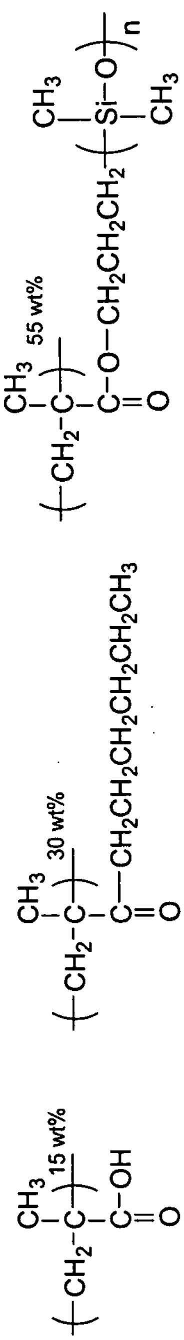

55 wt%

30 wt%

15 wt%

[BZ-4]

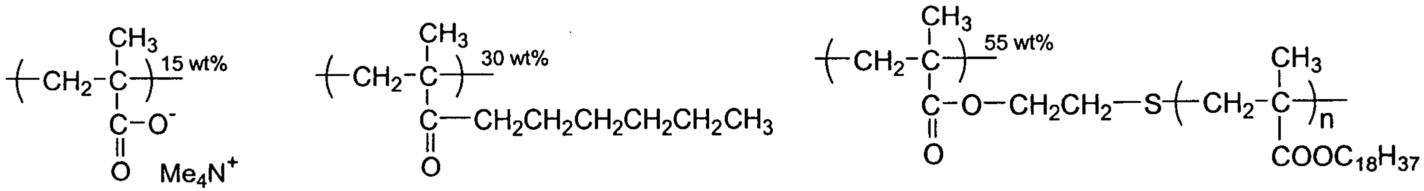

15 wt% 30 wt% 55 wt%

[BZ-5]

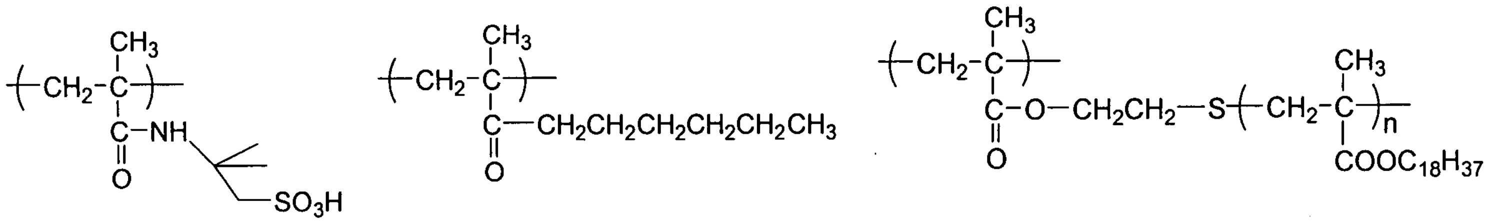

15 wt% 30 wt% 55 wt%

[BZ-6]

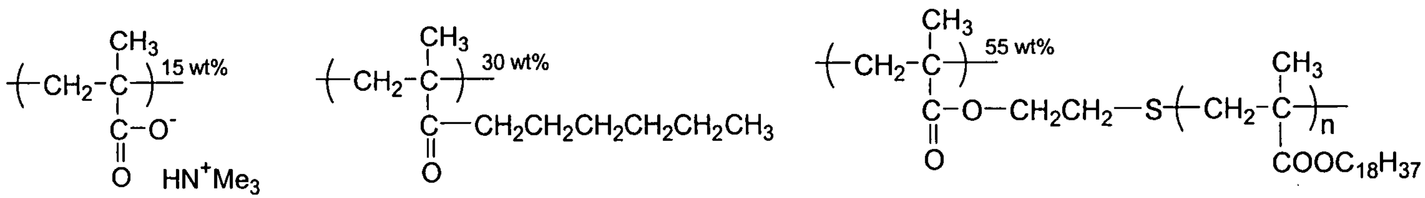

15 wt% 30 wt% 55 wt%

[BZ-7]

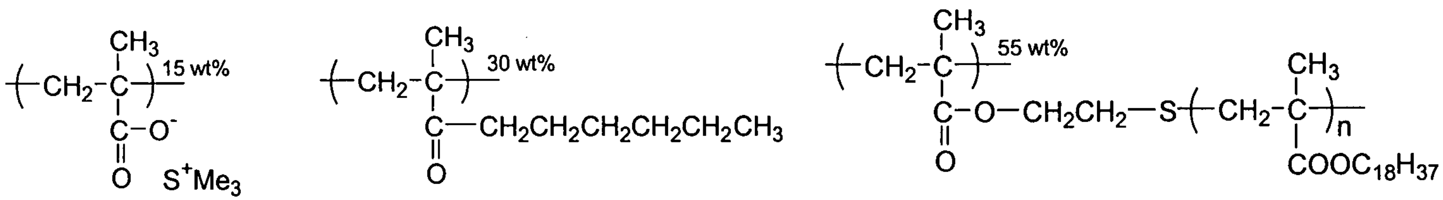

15 wt% 30 wt% 55 wt%

[BZ-8]

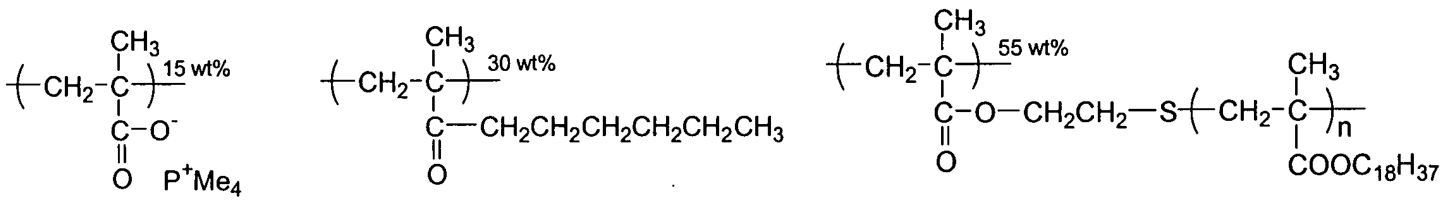

15 wt% 30 wt% 55 wt%

[BZ-9]

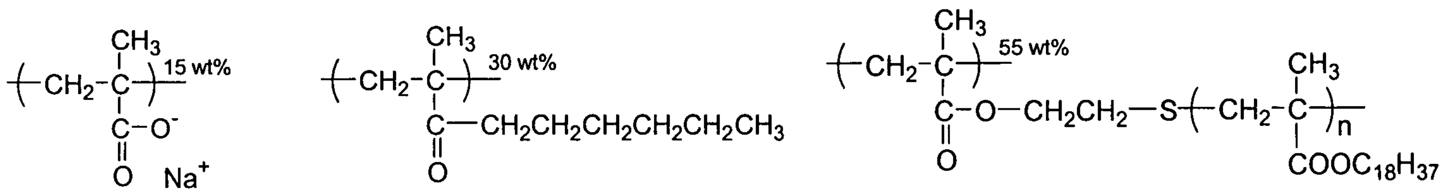

15 wt% 30 wt% 55 wt%

[BZ-10]

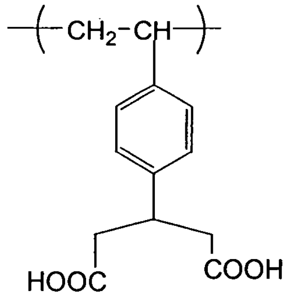

15 wt%

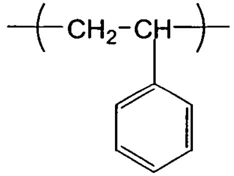

30 wt%

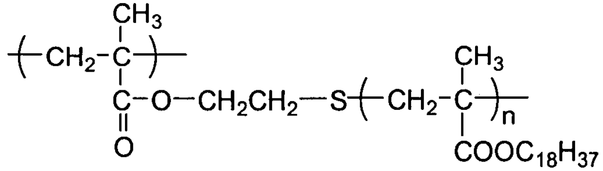

55 wt%

[BZ-11]

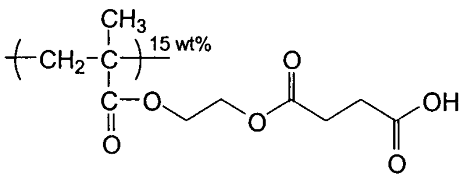

15 wt%

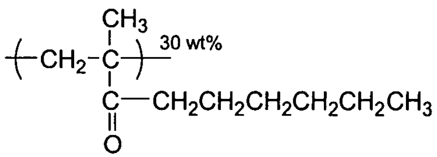

30 wt%

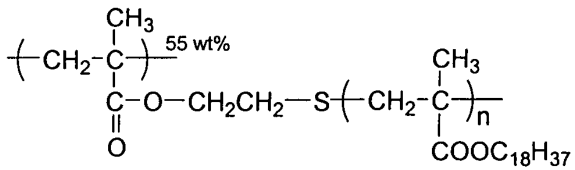

55 wt%

[BZ-12]

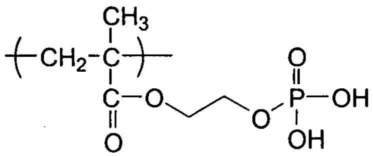

15 wt%

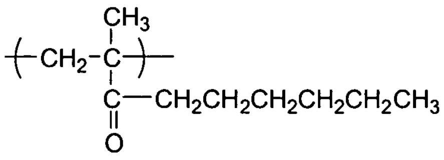

30 wt%

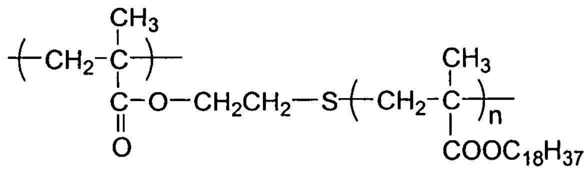

55 wt%

[BZ-13]

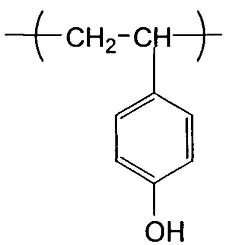

15 wt%

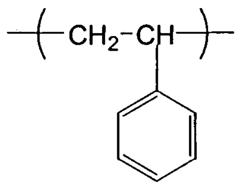

30 wt%

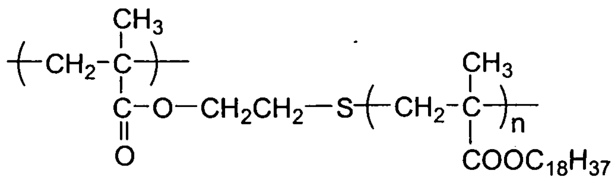

55 wt%

In view of the long term preservation stability of ink composition and ink ejection stability in the invention, the dispersant is preferably a graft polymer having a weight average molecular weight of from 1,000 to 1,000,000, and the degree of polydispersion (weight average molecular weight/ number average molecular weight) of the range of from 1.0 to 7.0.

Further, it is preferred that the weight average molecular weight of a graft polymer is 1.5 times or more the weight average molecular weight of the graft chain (preferably a macromer component represented by the above formula (10)).

The content of an acidic group or a salt obtained by neutralizing the acidic group on a main chain portion (the content of the functional group/the weight of the graft polymer) is preferably from 0.001 to 20 mmol/g, more preferably from 0.01 to 2.0 mmol/g. When the content is 0.001 mmol/g or more, the main chain portion is strongly adsorbed onto the charged particles, and when the content is 20 mmol/g or less, the preferred solubility of the graft polymer in a solvent can be maintained. The mass ratio of the unit constituting a main chain and the unit constituting a graft chain is preferably from 30/70 to 95/5. Such a polymer may be used alone as a dispersant, or two or more may be used in combination.

The content of a dispersant in the total ink composition is preferably from 0.01 to 30 mass%, more preferably from 0.01 to 15 mass%, and still more preferably from 0.01 to 5 mass%. When the content of a dispersant is 30 mass% or less, ink particles do not agglomerate, and an ink composition having uniform particle size distribution can be manufactured. In the manufacture of an ink composition in the invention, it is preferred to use a kneader, a dissolver, a mixer, a high speed disperser, a sand mill, a roll mill, a ball mill, an attritor, and a beads mill at the same time for blending and dispersing (making fine particles) a coloring material, a covering agent and a dispersant. At this time, if the amount of dispersant exceeds 30 mass%, small size particles are liable to be formed, and so the particle size distribution of the obtained ink becomes polydispersion. Since the quantity of electric charge of the surface of a charged particle is dependent upon the surface area of the particle, such ink that is polydispersed in particle size distribution varies widely in the quantity of electric charge of charged particles and stable ejection for long hours is difficult. Further, when the amount of dispersant is 0.01 mass% or more, ink particles do not cohere to form a paste on jet heads and circulating pumps, so that clogging of the heads and pumps can be prevented, and a desired particle diameter can be obtained, as a result ink ejection at the time of ink jet recording becomes easy.

Electric charge adjustor:

In the invention, a coloring material (preferably the mixture of a coloring material and a covering agent) is dispersed (made fine particles) in a dispersion medium with a dispersant, and it is preferred to use an electric charge adjustor in combination for controlling the charge quantity of particles.

As preferred electric charge adjustors, metal salt of organic carboxylic acid, e.g., zirconium naphthenate and zirconium octenoate, ammonium salt of organic carboxylic acid, e.g., tetramethylammonium stearate, metal salt of organic sulfonic acid, e.g., sodium dodecylbenzenesulfonate and magnesium dioctylsulfosuccinate, ammonium salts of organic sulfonic acid, e.g., tetrabutylammonium toluenesulfonate, a polymer having a carboxylic acid group on the side chain, e.g., a polymer having a carboxylic acid group obtained by modifying a copolymer of styrene and maleic anhydride with amine, etc., a polymer having a carboxylate anionic group on the side chain, e.g., a copolymer of stearyl methacrylate and tetramethyl- ammonium methacrylate, etc., a polymer having a nitrogen atom on the side chain, e.g., a copolymer of styrene and vinylpyridine, etc., and a polymer having an ammonium group on the side chain, e.g., a copolymer of butyl methacrylate and N-(2-methacryloyloxyethyl)-N,N,N-trimethylammonium tosylate, etc., are exemplified. For maintaining electric charge for hours, it is preferred in the invention to use electric charge adjustors of polymers. The electric charge given to particles may be positive charge or negative charge.

The amount of an electric charge adjustor in all the ink composition is preferably from 0.0001 to 10 mass%, and more preferably from 0.001 to 5 mass%. The quantity of charge of particles necessary for ejection is sufficed and appropriate in this range of the amount of an electric charge adjustor.

Other components:

Further, antibacterial agents for preventing rottenness and surfactants for controlling the surface tension can be used in the invention, according to purpose.

Manufacture of charged particles:

An ink composition can be manufactured with these components, by dispersing (making fine particles) a coloring material (preferably a coloring material and a covering agent) with a dispersant of the invention. As the methods of dispersion (making fine particles), e.g., the following methods are exemplified.

1) After mixing a coloring material and a covering agent in advance, the mixture is dispersed (made fine particles) with a dispersant and a dispersion medium, and an electric charge adjustor is added.
2) A coloring material, a covering agent, a dispersant and a dispersion medium are dispersed (made fine particles) simultaneously, and then an electric charge adjustor is added.
3) A coloring material, a covering agent, a dispersant, an electric charge adjustor and a dispersion medium are dispersed (made fine particles) simultaneously.

Apparatus such as a kneader, a dissolver, a mixer, a high speed disperser, a sand mill, a roll mill, a ball mill, an attritor, and a beads mill are used in mixing and dispersing.

Physical characteristic values of ink composition:

The thus manufactured ink composition is recorded on a recording medium by an ink jet recording system. For ensuring stable ejection of ink droplets at all times in long term ink jet recording, it is preferred in the invention to use an ink composition that satisfies all of the following conditions (A) to (D).

(A) The electric conductivity of an ink composition at 20°C is in the range of from 1 to 5,000 nS/m.
(B) The electric conductivity of charged particles is 20% or more of the electric conductivity of an ink composition.
(C) The volume average diameter of charged particles is in the range of from 0.2 to 5.0 μm.
(D) The coefficient of viscosity of an ink composition at 20°C is in the range of from 0.5 to 50 mPa·s.

The electric conductivity of an ink composition at 20°C is preferably from 1 to 5,000 nS/m. When the electric conductivity of an ink composition is 1 nS/m or more, ejection of ink droplets is good, and when 5,000 nS/m or less, the ink smoothly passes through the heads (ejecting sections) of ink jet apparatus and the heads are not damaged. More preferably the electric conductivity is from 10 to 100 nS/m.
The electric conductivity of particles is a value obtained by centrifugally precipitating an ink composition, measuring the electric conductivity of the supernatant after the particles are precipitated, and subtracting the measured value of the supernatant from the electric conductivity of the ink composition.
It is preferred in the invention that the electric conductivity of ink particles is 20% or more of the electric conductivity of the ink composition. In an ink jet recording system utilizing electrostatic field, charged particles are concentrated when ink droplets are ejected, and the charged particles are concentrated when the electric conductivity of the particles is 20% or more, so that blotting of the ink does not occur when recorded on a recording medium. The electric conductivity is more preferably 30% or more.
Further, the quantity of electric charge of particles is preferably from 1 to 1,000 μC/g. When the quantity of electric charge is 1 μC/g or more, sufficient concentration is secured, and when the quantity is 1,000 μC/g or less, the ink is not excessively concentrated, so that clogging of ink at the spouts of head can be prevented. The quantity of electric charge is more preferably in the range of from 10 to 500 μC/g, and still more preferably from 15 to 100 μC/g.
The volume average diameter of particles can be measured by a centrifugal precipitation method with an apparatus, e.g., an ultracentrifugal automatic particle size distribution measuring apparatus CAPA-700 (manufactured by HORIBA LTD.). There are a volume average diameter and a number average diameter in the average diameter of charged particles according to computing methods. In the invention, the volume average diameter of charged particles is preferably from 0.2 to 5.0 μm. When the volume average diameter is 0.2 μm or more, the concentration of particles is sufficient, as a result, blotting of inks can be prevented when recorded on a recording medium. When the average diameter is 5. 0 μm or less, clogging of an ink composition at the spouts of head does not occur. The average diameter is more preferably from 0.3 to 3.0 μm. The particle size distribution is preferably narrower and uniform, and volume average diameter/number average diameter of particle ($\Phi v/\varphi n$) is preferably in the range of from 1.0 to 5.0, more preferably from 1.0 to 4.0.
The coefficient of viscosity of an ink composition is preferably in the range of from 0.5 to 50 mPa·s in the invention. When the coefficient of viscosity is 0.5 mPa·s or more, a problem of dripping of ink droplets from the spouts does not occur, and when it is 50 mPa·s or less, ejection of ink droplets is good. The coefficient of viscosity is more preferably from 0.8 to 10 mPa·s.
The surface tension of an ink composition is preferably in the range of from 10 to 70 mN/m. When the surface tension is 10 mN/m or more, a problem of dripping of ink droplets from the spouts does not occur, and when the surface tension is 70 mN/m or less, ejection of ink droplets is good. The surface tension of an ink composition is more preferably from 15 to 50 mN/m.

Ink jet recording apparatus:

The above ink composition is recorded on a recording medium by an ink jet recording system, and an ink jet recording system utilizing electrostatic field is preferably used in the invention. An ink jet recording system using electrostatic field is a system of applying voltage between a control electrode and a back electrode in rear of a recording medium to thereby concentrate the charged particles of an ink composition at the ejecting position by the electrostatic force, and ejecting the ink composition from the ejecting position to a recording medium. The voltage applied between a control electrode and a back electrode is, e.g., the control electrode is positive and the back electrode is negative when the particles are positively charged. The same effect can be obtained by electrifying a recording medium in place of applying voltage to a back electrode.

As an ink jet system, for example, a system of jetting ink from a needle-like tip such as an injection needle is known, and recording can be expedited by using the ink composition of the invention.

On the other hand, in a system wherein ink is circulated in an ink chamber having an ejection opening, and concentrated ink droplets are ejected from the tip of an ink guide present in the ejection opening, the tip of which facing the side of a recording medium, by the application of voltage to a control electrode formed around the ejection opening, recording can be performed stably for a long period of time, since the replenishment of charged particles by the circulation of the ink and the meniscus stability at the ejecting position can be compatible. Further in the system, since the exposure of the ink to the air is limited only to the ejection opening, evaporation of the solvent is inhibited and physical characteristics of the ink are stabilized, so that the system can be very preferably used in the invention.

An example of the structure of an ink jet recording apparatus suitable to use the ink composition of the invention is described below.

In the first place, the outline of the apparatus of performing four-color printing on one side of a recording medium shown in Fig. 1 is described.

Ink jet recording apparatus 1 shown in Fig. 1 is equipped with jet head 2 comprising jet heads 2C, 2M, 2Y and 2K of four colors for performing full color image formation, ink circulating system 3 for supplying inks to jet head 2 and recovering inks from jet head 2, head driver 4 for driving jet head 2 by the output from the outside apparatus such as a computer and RIP not shown, and position controlling means 5. Ink jet recording apparatus 1 is further equipped with carrier belt 7 stretching on three rollers 6A, 6B and 6C, carrier belt position detecting means 8 consisting of an optical sensor and the like capable of detecting the position of carrier belt 7 in the width direction, electrostatic suction means 9 for maintaining recording medium P on carrier belt 7, and destaticizing means 10 and mechanical means 11 for peeling away recording medium P from carrier belt 7 after conclusion of image formation. Feed roller 12 and guide 13 for feeding recording medium P from a stocker not shown to carrier belt 7, and fixing means 14 and guide 15 for fixing the inks on recording medium P after being peeled and carrying the recording medium to a stocker of discharged paper not shown are arranged on the upstream and the downstream of carrier belt 7. In the inside of ink jet recording apparatus 1 are arranged recording medium position-detecting means 16 at the position facing jet head 2 with carrier belt 7 between, exhaust fan 17 for recovering the vapor of the solvent occurring from the ink composition, and a solvent recovery part comprising solvent vapor adsorbing material 18, and the vapors in the inside of the apparatus are exhausted through the recovery part.

As feed roller 12, well-known rollers can be used, and feed roller 12 is arranged so that the feeding ability of recording medium P is increased. It is preferred to remove dirt and powder adhered on recording medium P. Recording medium P fed by feed roller 12 is carried to carrier belt 7 through guide 13. The back surface of carrier belt 7 (preferably a metal back surface) is provided via roller 6A. The recording medium carried is electrostatically adsorbed on the carrier belt by electrostatic suction means 9. In Fig. 1, electrostatic suction is performed with a Scorotron charger connected to negative high voltage power supply. The recording medium is electrostatically sucked on carrier belt 7 without floatation by electrostatic suction means 9 and, at the same time, the surface of the recording medium is uniformly charged. The electrostatic suction means is also utilized as an electrifying means of recording medium P here, but an electrifying means may be provided separately. Charged recording medium P is carried to the jet head part by means of carrier belt 7, and electrostatic ink jet image is formed by piling recording signal voltage with charged potential as bias. Image-recorded recording medium P is destaticized by destaticizing means 10, peeled away from carrier belt 7 by mechanical means 11, and carried to the fixing part. Peeled recording medium P is carried to image fixing means 14 and fixed. The fixed recording medium P is discharged to a stocker of discharged paper not shown through guide 15. The ink jet recording apparatus is also equipped with a recovery means of the vapor of the solvent occurring from the ink composition. The recovery means comprises solvent vapor adsorbing material 18, the air containing the solvent vapor in the apparatus is introduced into the adsorbing material by exhaust fan 17, and the vapor is recovered by adsorption and exhausted out of the apparatus. The ink jet recording apparatus is not limited to the above example, and the number; shape, and relative arrangement of constitutional devices, e.g., rollers and charger, and charge polarity can be arbitrarily selected. Four-color imaging is described in the above system, but the system may be a more multicolored system in combination with light-colored inks and special inks.

The ink jet recording apparatus used in ink jet printing method has jet head 2 and ink circulating system 3, and ink circulating system 3 further comprises an ink tank, an ink circulating unit, an ink concentration controlling unit and an ink temperature controlling unit, and the ink tank may contain a stirrer.

As jet head 2, a single channel head, a multi-channel head or a full line head can be used. Main scanning is performed by the rotation of carrier belt 7.

An ink jet head preferably used in the invention is an ink jet head of a system of performing ejection by increasing the concentration of ink in the vicinity of the opening by the electrophoresis of charged particles in ink channel. This method performs ejection of ink droplets by electrostatic suction force mainly originating in the recording medium or the counter electrodes arranged in the rear of the recording medium. Accordingly, even when the recording medium or the counter electrodes do not counter the head, or when voltage is not applied to the recording medium or the counter electrodes although they are positioned facing the head, ink droplets are not ejected and the inside of the apparatus does not become dirty even if voltage is applied to the ejection electrodes or vibration is given by error.

The jet head preferably used in the above ink jet apparatus is shown in Figs. 2 and 3. As shown in Figs. 2 and 3, ink jet head 70 has electrical insulating substrate 74 constituting the upper wall of ink channel 72 forming one way ink flow Q, and a plurality of ejecting sections 76 ejecting ink droplets toward recording medium P. Ink guide section 78 to guide ink droplets G jetting from ink channel 72 to recording medium P is provided in each ejecting section 76, openings 75 in each of which ink guide section 78 is laid through are formed on substrate 74, and ink meniscus 42 is formed between ink guide section 78 and the inner wall of opening 75. The gap d between ink guide section 78 and recording medium P is preferably from 200 to 1, 000 $\mu$m or so. Ink guide section 78 is fixed on supporting bar 40 at the lower side.

Substrate 74 has insulating layer 44 electrically insulating two ejection electrodes by separating by a prescribed space, first ejection electrode 46 formed on the upper side of insulating layer 44, insulating layer 48 covering first ejection electrode 46, guard electrode 50 formed on the upper side of insulating layer 48, and insulating layer 52 covering guard electrode 50. Further, substrate 74 has second ejection electrode 56 formed on the lower side of insulating layer 44, and insulating layer 58 covering second ejection electrode 56. Guard electrode 50 is provided to prevent the electric fields of the contiguous ejecting sections from being influenced by the voltage applied to first ejection electrode 46 and second ejection electrode 56.

Ink jet head 70 further has floating conductive plate 62 provided in an electrically floating state. Floating conductive plate 62 constitutes the bottom of ink channel 72 and, at the same time, migrates upward (i.e., toward the side of a recording medium) ink particles (charged particles) R in ink channel 72 positively charged by induced voltage steadily generating by the pulse-like ejection voltage applied to first ejection electrode 46 and second ejection electrode 56. Further, insulating covering film 64 is formed on the surface of floating conductive plate 62 to thereby prevent the physical properties and composition of ink from becoming labile by the application of electric charge to the ink, etc. The electric resistance of the electrical insulating covering film is preferably $10^{12}$ $\Omega$·cm or more, more preferably $10^{13}$ $\Omega$· cm or more. It is preferred that the insulating covering film is anticorrosive to ink, by which floating conductive plate 62 is prevented from being corroded by ink. Floating conductive plate 62 is further covered with insulating member 66 from the down side. Floating conductive plate 62 is completely electrically insulated by this constitution.

Floating conductive plate 62 is present one or more per one head unit (for example, in the case where there are four heads of C, M, Y and K, each head has at least one floating conductive plate, and there is no case where C and M head units have a common floating conductive plate).

As shown in Fig. 3, for recording on recording medium P by ejecting ink droplets from ink jet head 70, ink flow Q is generated by circulating the ink in ink channel 72, and prescribed voltage (e.g. , +100 V) is applied to guard electrode 50. Further, positive voltage is applied to first ejection electrode 46, second ejection electrode 56 and recording medium P (when gap d is 500 $\mu$m, to form the potential difference of from 1 kV to 3.0 kV or so is a standard) so as to form ejecting electric field among first ejection electrode 46, second ejection electrode 56 and recording medium P by which positively charged particles R in ink droplets G guided by ink guide section 78 and jetted from opening 75 are attracted to recording medium P.

When pulse voltage is applied to first ejection electrode 46 and second ejection electrode 56 in this state according to image signals, ink droplets G heightened in concentration of charged particles are ejected from opening 75 (for example, when the initial charged particle concentration is from 3 to 15%, the charged particle concentration of ink droplets G becomes 30% or more).

At that time, the value of voltage applied to first ejection electrode 46 and second ejection electrode 56 is in advance adjusted so that ink droplets G are ejected only when pulse voltage is applied to both first ejection electrode 46 and second ejection electrode 56.

Thus when pulse-like positive voltage is applied, ink droplets G are guided from opening 75 to ink guide section 78 and jetted and adhered to recordingmedium P, at the same time, positive induced voltage is generated in floating conductive plate 62 by the positive voltage applied to first ejection electrode 46 and second ejection electrode 56. Even if the voltage applied to first ejection electrode 46 and second ejection electrode 56 is pulse voltage, the induced voltage is almost steady voltage. Accordingly, positively charged particles R in ink channel 72 get a force to migrate upward by

the electric field formed among floating conductive plate 62, guard electrode 50 and recording medium P, so that the concentration of charged particles R becomes high in the vicinity of substrate 74. As shown in Fig. 3, when many ejecting sections (that is, channels for ejecting inks) are used, the number of charged particles necessary for ejection increases, but the number of first ejection electrode 46 and second ejection electrode 56 used increases, so that the induced voltage induced by floating conductive plate 62 becomes high, as a result the number of charged particles R migrating toward the recording medium also increases.

In the above, the example of positively charged colored particles is described, but the colored particles may be negatively charged. In that case, the above charge polarities are all inversed polarities.

In the invention, it is preferred to fix inks by an appropriate heating means after ink ej action to a recording medium. As the heating means, a contact type heating apparatus, e.g., a heat roller, a heat block and belt heating, and a non-contact type heating apparatus, e.g., a drier, an infrared lamp, a visible ray lamp, an ultraviolet lamp, and a hot air oven can be used. These heating apparatus are preferably linking and integrated with an ink jet recording apparatus. The temperature of a recording medium at fixing time is preferably from 40 to 200°C for easiness of fixation. The fixing time is preferably in the range of from 1 μsec to 20 sec.

Replenishment of ink composition:

In an ink jet recording system utilizing electrostatic field, the charged particles in an ink composition are ejected in a concentrated state. Accordingly, when ink ejection is performed for hours, the amount of the charged particles in an ink composition is reduced and the electric conductivity of the ink composition lowers. Further, the proportion of the electric conductivity of the charged particles and the electric conductivity of the ink composition changes. In addition, since charged particles having greater particle sizes are liable to be ejected prior to charged particles having smaller particle sizes, the average diameter of charged particles becomes small. Further, the amount of solids content in the ink composition changes, so that the coefficient of viscosity also changes. The fluctuation of the values of physical properties results in ejection failure, reduction of the optical density of recorded images and ink blotting. Therefore, by replenishing an ink composition having higher concentration (high in the solids content concentration) than the ink composition introduced in an ink tank at the beginning, the amount loss of the charged particles can be prevented, and the electric conductivity of the ink composition, and the proportion of the electric conductivity of the charged particles and the electric conductivity of the ink composition can be maintained in constant ranges. Further, the average particle size and the coefficient of viscosity can also be maintained. Moreover, ink ejection can be performed for a long period of time stably by maintaining the values of physical properties of the ink composition in a constant range. It is preferred to perform replenishment at this time mechanically or manually by computing the ullage from the detection of the values of physical properties such as electric conductivity and optical density of the ink solution in use. Replenishment may also be performed mechanically or manually by computing the amount of ink composition to be used on the basis of the image data.

Recording medium:

In the invention, a variety of recording media can be used according to purposes. For example, by using papers, plastic films, metals, papers laminated or deposited with plastics or metals, and plastic films laminated or deposited with metals, directly printed products can be obtained by ink jet recording. The shapes of recording media may be a sheet-like'planar shape or may be three-dimensional as a cylindrical shape.

Fixation:

In the invention, it is preferred to fix inks by an appropriate heating means after ink ejection to a recording medium. As the heating means, a contact type heating apparatus, e.g., a heat roller, a heat block and belt heating, and a non-contact type heating apparatus, e.g., a drier, an infrared lamp, a visible ray lamp, an ultraviolet lamp, and a hot air oven can be used. These heating apparatus are preferably linking and integrated with an ink jet recording apparatus.

The ink composition described above has preservation stability for a long period of time, and the ejection of ink droplets can be stably carried out for hours. Further, by using the above ink jet recording apparatus, image-recorded matters having high image density and high quality free from ink blotting can be obtained for long hours.

EXAMPLE

The invention will be described with reference to Examples, but the invention is not limited thereto.

The following materials were used in Example 1.

- Black pigment (a coloring material) : carbon black (shown in Table 2)
- Covering agent (AP-1)
- Dispersant (BZ-1) and (BZ-2)
- Electric charge adjustor (CT-1)
- Dispersion medium, Isopar G (manufactured by Exxon)

The structures of covering agent (AP-1), dispersant (BZ-2) and electric charge adjustor (CT-1) are shown below.

Covering Agent [AP-1]

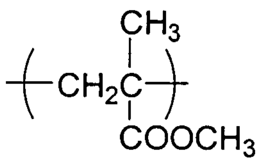

35 wt%

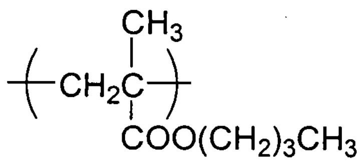

55 wt%

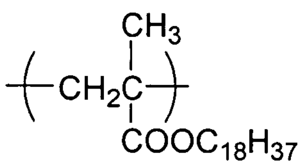

5 wt%

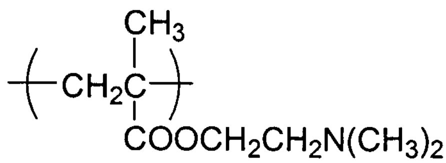

5 wt%

[CT-1]

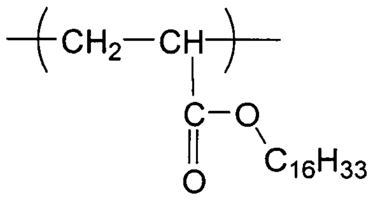

50 mol%

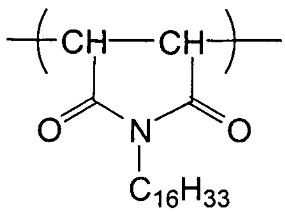

25 mol%

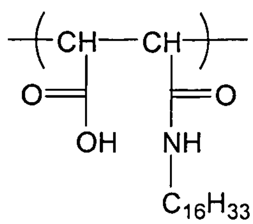

25 mol%

[BZ-2] 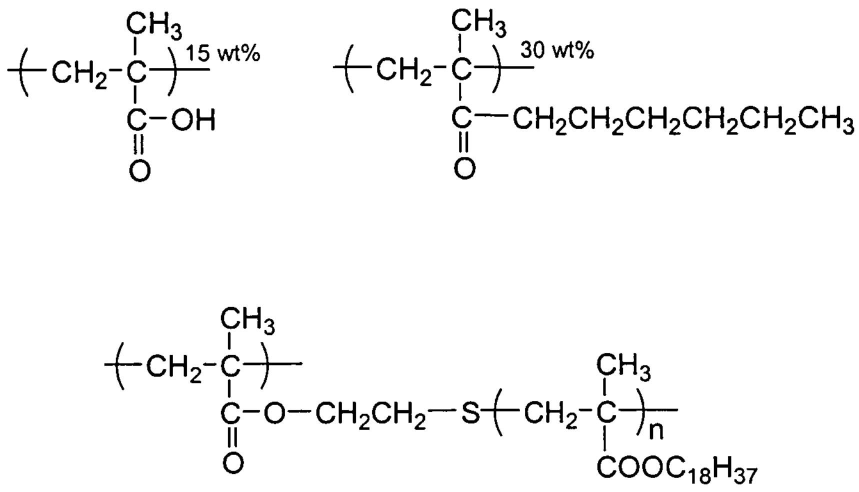

Synthesis of Covering Agent (AP-1) and Electric Charge Adjustor (CT-1):

Covering Agent (AP-1) was obtained by radical polymerization of methyl methacrylate, butyl methacrylate, stearyl methacrylate and 2-(N,N-dimethylamino)ethyl methacrylate by using a well-known polymerization initiator V65 (a product of Wako Pure Chemical Co., Ltd. ) . The weight average molecular weight of (AP-1 ) was 15, 000, the degree of polydispersion (weight average molecular weight/number average molecular weight) was 2.7, the glass transition point (a mid point) was 51°C, and the softening point by a strain gauge method was 46°C.

Electric charge adjustor (CT-1) was obtained by reaction of a copolymer of 1-octadecene and maleic anhydride and 1-hexadecylamine. The weight average molecular weight of (CT-1) was 17,000.

Synthesis of Dispersant (BZ-2):

Dispersant (BZ-2) was obtained by radical polymerization of stearyl methacrylate polymer (BP-1) having a methacryloyl group at the terminal with methacrylic acid and n-hexyl methacrylate. The weight average molecular weight of (BZ-2) was 127,000.

EXAMPLE 1

Manufacture of Ink Composition (EC-1):

Ten (10) grams of a black pigment (carbon black #4000B (pH: 10.0), manufactured by Mitsubishi Chemical Corporation) and 20 g of covering agent (AP-1) were put in a bench kneader PBV-0.1 (manufactured by Irie Shokai Co., Ltd.), and mixed with heating for 2 hours at heating temperature of 100°C. The obtained mixture (30 g) was coarsely pulverized in a Trio-Blender (manufactured by Trio Science Co., Ltd.), and further finely pulverized with an SK-M10 type sample mill (manufactured by Kyoritsu Rikoh Co., Ltd.). The obtained finely pulverized product (30 g) was preliminarily dispersed with 7.5 g of dispersant (BZ-1) , 75 g of Isopar G and glass beads having a diameter of about 3.0 mm with a paint shaker (manufactured by Toyo Seiki Seisaku-Sho, Ltd.). After removing the glass beads, the preliminarily dispersed product was dispersed (made fine particles) with zirconia ceramic beads having a diameter of about 0.6 mm in Type KDL DYNO-MILL (manufactured by Shinmaru Enterprises Corporation) with maintaining the inner temperature at 25°C for 5 hours, subsequently at 45°c for 5 hours, at an engine speed of 2,000 rpm. Zirconia ceramic beads were removed from the obtained dispersion, and 316 g of Isopar G and 0.6 g of electric charge adjustor (CT-1) were added thereto, whereby ink composition (EC-1) was obtained.

Evaluation of Ink Jet Recording/Image:

Ink composition (EC-1) was filled in each of the ink tank of the ink jet recording apparatus shown in Figs. 1 to 3. As the jet head, 150 dpi (three-row zigzag layout of channel density of 50 dpi) and 833 channel heads of the type as shown in Fig. 2, and as the fixing means a silicone rubber heat roller having a built-in type 1 kW heater were used. As the temperature controlling means, an immersion heater and stirring blades were provided in the ink tank, ink temperature

was set at 30°C, and the temperature was controlled with a thermostat with rotating the stirring blades at 30 rpm. The stirring blades were also used as a stirring means to prevent precipitation and agglomeration. The ink channel was made partly transparent, an LED luminescent element and a light detecting element were arranged with the ink channel between, and according to the output signals of the detecting element, a dilution solution of the ink (Isopar G) or concentrated ink (obtained by concentrating the solids content of the above ink composition 2 times) was put into the tank for controlling the concentration. As the recording medium, fine coat paper for offset printing was used. The dirt on the surface of the recording medium was removed by air pump suction, and then the jet heads were approached to the image-forming position of the recording medium, the image data to be recorded were transmitted to the arithmetic and control unit of image data, the jet heads were gradually moved with carrying the recording medium by the rotation of the carrier belt to eject the ink composition, and an image was formed by 2,400 dpi imaging resolution. As the carrier belt, a metal belt laminated with a polyimide film was used. Line markers were arranged near one end of the belt along the carrying direction, and the markers were optically read by a carrier belt-detecting means, and an image was formed by driving a position controlling means. At this time, the distance of 0.5 mm between the jet heads and the recording medium was maintained by the output of an optical gap-detecting unit. The surface potential of the recording medium was set at -1.5 kV at the time of ejection, pulse voltage of +500 v (pulse width of 50 μsec) was applied in performing ejection, and the image was formed at driving frequency of 15 kHz.

The electric charge and the ink jet imaging of the obtained gray scale image-recorded matter (printed matter) were evaluated as follows.

Evaluation of electric charge:

The quantity of electric charge of an ink composition was obtained from the specific conductivity measured with an LCR meter and electrodes for liquid (LP-05 type, manufactured by Kawaguchi Electric Works Co., Ltd.), and applied voltage of 5 V and frequency of 1 kHz. The electric conductivity of ink particles was obtained by centrifugally precipitating an ink composition, measuring the electric conductivity of the supernatant, and subtracting the measured value of the supernatant from the electric conductivity of the ink composition at large. Centrifugation was performed with a compact high speed cooling centrifuge (SRX-201, manufactured by TOMY SEIKO Co., Ltd.) at an engine speed of 14, 500 rpm, at 20°C for 30 minutes.

Electric charge generating efficiency of ink particles was found according to the following equation.

Electric charge generating efficiency of ink particles (%) = (electric charge quantity of ink particles Q1/electric charge quantity of ink composition Q2) × 100

The aging stability of electric charge was obtained from the electric charge Q3 of an ink composition put in a polyethylene bottle and allowed to stand at 50°C 80% RH for one week and the electric charge Q4 of the ink composition before being allowed to stand according to the following equation.

The rate of change of the quantity of electric charge by aging (%) = (Q3/Q4) × 100

EXAMPLE 2

Ink composition (EC-2) was prepared in the same manner as in Example 1 except that carbon black #40 (pH: 7.5, manufactured by Mitsubishi Chemical Corporation) was used as the black pigment. The electric charge and ink jet imaging of the obtained ink were evaluated.

COMPARATIVE EXAMPLE 1

Ink composition (RC-1) was prepared in the same manner as in Example 1 except that carbon black MA100 (pH: 3 . 5, manufactured byMitsubishi Chemical Corporation) was used as the black pigment. The electric charge and ink jet imaging of the obtained ink were evaluated.

The results obtained are shown in Table 1 below.

TABLE 1

| Example No. | Quantity of Electric Charge of Ink Particles (pS/cm) | Electric Charge Generating Efficiency of Ink Particles (%) | Aging Stability of Electric Charge[1)] | Image Quality by Ink Jet Imaging[2)] |
|---|---|---|---|---|
| Example 1 | 830 | 84 | A | A |
| Example 2 | 760 | 80 | A | A |
| Comparative Example 1 | 250 | 33 | C | C |

1) Aging stability of electric charge

A: The rate of change of the quantity of electric charge by aging of 95% or more
B: The rate of change of the quantity of electric charge by aging of less than 95% and 80% or more
C: The rate of change of the quantity of electric charge by aging of less than 80%

2) Image quality by ink jet imaging (the degree of blotting of the image was evaluated by visual observation)

A: Free of blotting.
B: Blotting occurred a little.
C: Blotting occurred.

As shown by the results in Examples 1 and 2, by ink compositions' containing basic carbon black of the invention, the electric charge generating efficiency of the ink particles and the aging stability of electric charge are improved, and the speed of electrophoresis of ink particles at the ejecting sections in ink jet imaging according to the system is sufficiently high and the ink particles are sufficiently concentrated, so that images of good quality free from blotting can be obtained.

Comparative Example 1 shows the results of using acidic carbon black, wherein the electric charge generating efficiency of the ink particles and the aging stability of electric charge are insufficient, and the speed of electrophoresis of the ink particles at the ejecting sections in ink jet imaging according to the system is slow and the ink particles are not sufficiently concentrated, so that blotting occurs and images of good quality cannot be obtained.

EXAMPLES 3 TO 22

Ink compositions (EC-3) to (EC-22) were prepared in the same manner as the preparation of (EC-2) in Example 2 except that coloring materials (carbon blacks) used were changed to each shown in Table 2 below.

TABLE 2

| Example No. | Ink Comp. | Carbon Black | pH |
|---|---|---|---|
| Example 3 | EC-3 | #2300 (manufactured by Mitsubishi Chemical Corporation) | 8.0 |
| Example 4 | EC-4 | #980 (manufactured by Mitsubishi Chemical Corporation) | 7.3 |
| Example 5 | EC-5 | #960 (manufactured by Mitsubishi Chemical Corporation) | 7.5 |
| Example 6 | EC-6 | #850 (manufactured by Mitsubishi Chemical Corporation) | 8.2 |
| Example 7 | EC-7 | #750B (manufactured by Mitsubishi Chemical Corporation) | 7.8 |
| Example 8 | EC-8 | #52 (manufactured by Mitsubishi Chemical Corporation) | 8.5 |
| Example 9 | EC-9 | #45 (manufactured by Mitsubishi Chemical Corporation) | 8.2 |
| Example 10 | EC-10 | #32 (manufactured by Mitsubishi Chemical Corporation) | 8.7 |

Table continued

| Example No. | Ink Comp. | Carbon Black | pH |
|---|---|---|---|
| Example 11 | EC-11 | #25 (manufactured by Mitsubishi Chemical Corporation) | 8.0 |
| Example 12 | EC-12 | #4350 (manufactured by Mitsubishi Chemical Corporation) | 10.0 |
| Example 13 | EC-13 | REGAL 330R (manufactured by Cabot Co., Ltd.) | 7.3 |
| Example 14 | EC-14 | ELFTEX 415 (manufactured by Cabot Co., Ltd.} | 8.3 |
| Example 15 | EC-15 | #4000B (Mitsubishi Chemical Corp.)/#40 (Mitsubishi Chemical Corp.) = 75/25 (wt%) | 9.5 |
| Example 16 | EC-16 | #40 (Mitsubishi Chemical Corp.)/#850 (Mitsubishi Chemical Corp.) = 50/50 (wt%) | 7.8 |
| Example 17 | EC-17 | #4000B (Mitsubishi Chemical Corp.)/#52 (Mitsubishi Chemical Corp.) = 50/50 (wt%) | 9.0 |
| Example 18 | EC- 18 | #52 (Mitsubishi Chemical Corp.)/#4350 Mitsubishi Chemical Corp.) = 50/50 (wt%) | 9.4 |
| Example 19 | EC-19 | #45 (Mitsubishi Chemical Corp.)/REGAL 330R (Cabot Co., Ltd.) = 50/50 (wt%) | 7.7 |
| Example 20 | EC-20 | #4350 (Mitsubishi Chemical Corp.)/ELFTEX 9.7 415 (Cabot Co, Ltd.)= 50/50 (wt%) | 9.7 |
| Example 21 | EC-21 | #4000B (Mitsubishi Chemical Corp.)/#40 (Mitsubishi Chemical Corp.)/ ELFTEX. 415 (Cabot Co., Ltd.)= 40/30/30 (wt%) | 8.8 |
| Example 22 | EC-22 | #40 (Mitsubishi Chemical Corp.)/#850 (Mitsubishi Chemical Corp.)/REGAL 330R (Cabot Co., Ltd.) = 40/30/30 (wt%) | 8.2 |

Evaluations of the above-obtained inks were performed in the same manner as in Example 1. It has been found from the evaluations that by using the coloring materials (basic carbon blacks) in Examples 3 to 22, the electric charge generating efficiency of the ink particles and the aging stability of electric charge are improved, and the speed of electrophoresis of ink particles at the ejecting sections in ink jet imaging according to the system is sufficiently high and the ink particles are sufficiently concentrated, so that images of good quality free from blotting can be obtained.

By using the ink composition of the invention for ink jet recording, it is possible to eject ink droplets stably, constantly and continuously in ink jet recording for long hours, and high quality images not accompanied by ejection failure and free of the reduction of density and blur of ink can be formed. Further, the ink composition of the invention for ink jet recording has preservation stability for a long period of time.

The entire disclosure of each and every foreign patent application from which the benefit of foreign priority has been claimed in the present application is incorporated herein by reference, as if fully set forth.

## Claims

**1.** An ink composition for ink jet recording, comprising:

a dispersion medium; and
a charged particle comprising a coloring material,
wherein the ink composition comprises at least one basic carbon black as the coloring material.

**2.** The ink composition for ink jet recording as claimed in claim 1,
wherein the basic carbon black is basic carbon black obtained by decreasing carboxyl groups on the surface of carbon black by surface treatment.

**3.** The ink composition for ink jet recording as claimed in claim 1,
wherein the charged particle further comprises a covering agent that covers the coloring material.

**4.** The ink composition for ink jet recording as claimed in claim 3,

wherein the covering agent is a polymer comprising at least any one of the constitutional units represented by formulae (1) to (9) :

(1) 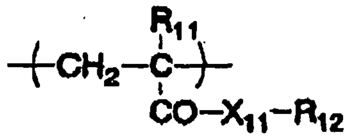

(2) 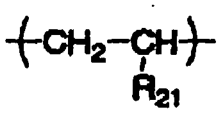

(3) 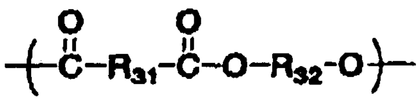

(4) 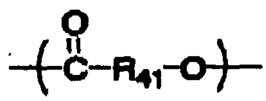

wherein, $X_{11}$ represents an oxygen atom or -N ($R_{13}$)- : $R_{11}$ represents a hydrogen atom or a methyl group; $R_{12}$ represents a hydrocarbon group having from 1 to 30 carbon atoms; $R_{13}$ represents a hydrogen atom or a hydrocarbon group having from 1 to 30 carbon atoms; $R_{21}$ represents a hydrogen atom or a hydrocarbon group having from 1 to 20 carbon atoms: and $R_{31}$, $R_{32}$ and $R_{41}$ each independently represents a divalent hydrocarbon group having from 1 to 20 carbon atoms.

**5.** The ink composition for ink jet recording as claimed in claim 1, further comprising a dispersant.

**6.** The ink composition for ink jet recording as claimed in claim 5,
wherein the dispersant is a graft polymer a main chain portion and a side chain portion of a graft chain, the main chain portion comprising at least one of an acidic group and a salt obtained by neutralizing the acidic group.

**7.** An ink jet recording method comprising
ejecting ink droplets by an ink jet recording system utilizing electrostatic field with the ink composition as claimed in claim 1.

FIG. 1

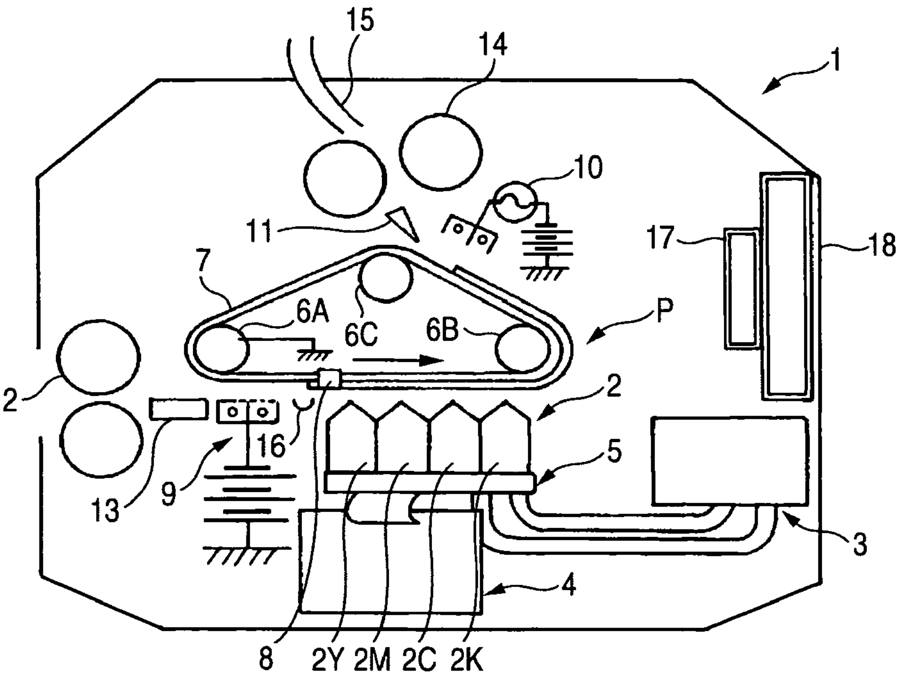

FIG. 2

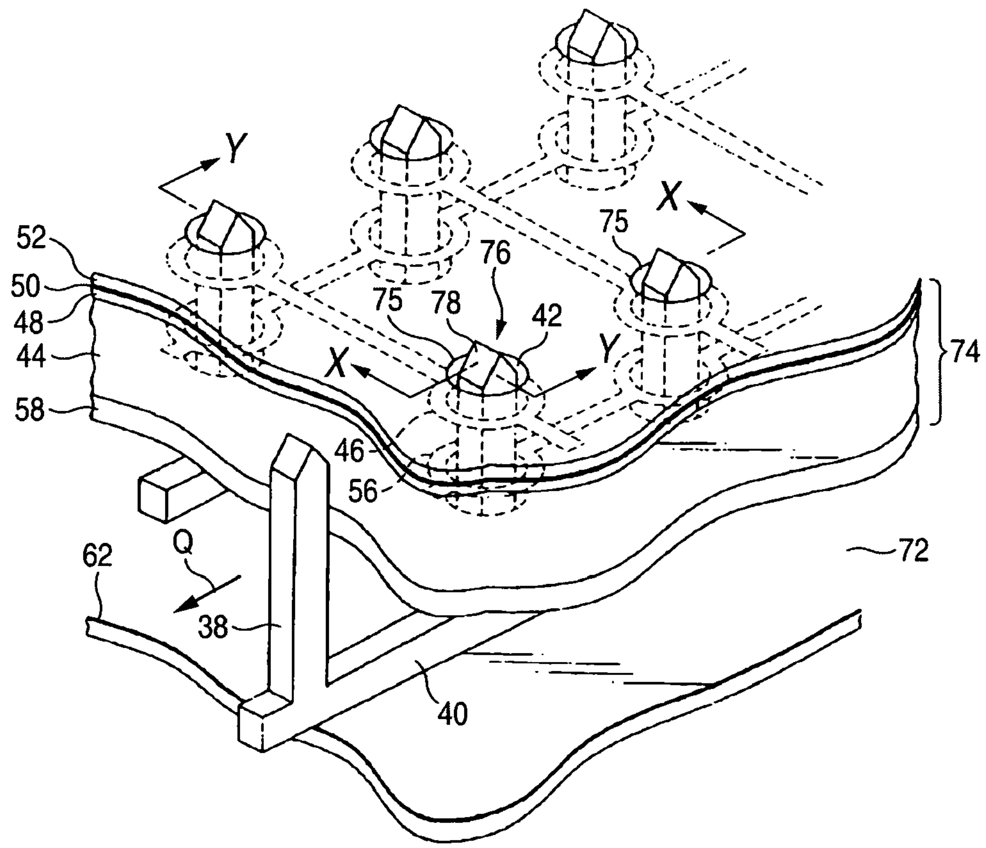

FIG. 3

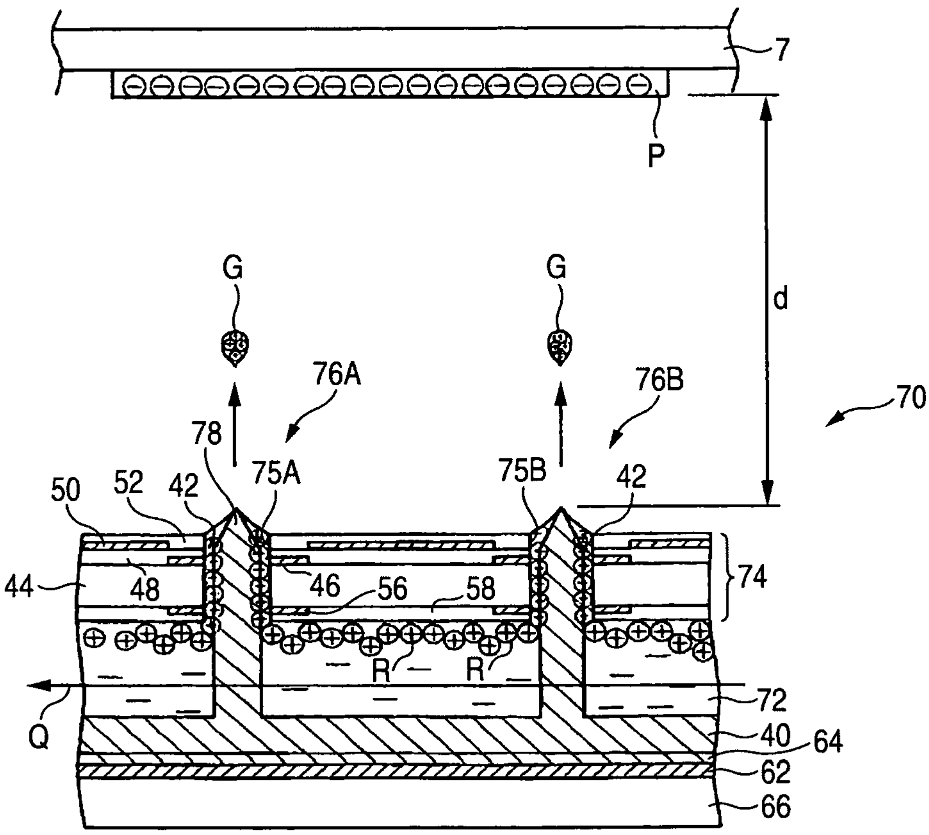
7
P
d
G
G
76A
76B
70
78
75A
75B
42
50
52
42
44
48
46
56
58
74
R
R
72
Q
40
64
62
66

European Patent Office

# EUROPEAN SEARCH REPORT

Application Number
EP 05 02 2870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 367 102 A (FUJI PHOTO FILM CO., LTD) 3 December 2003 (2003-12-03) * examples 3,5 * | 1-7 | C09D11/00 |
| X | WO 03/093377 A (DAINIPPON INK AND CHEMICALS, INC; YAMADA, YUTAKA; TAMAGUCHI, HISAO; OS) 13 November 2003 (2003-11-13) * the whole document * | 1-7 | |
| X | US 5 713 988 A (BELMONT ET AL) 3 February 1998 (1998-02-03) * claims; examples * | 1-7 | |
| X | EP 1 167 471 A (CANON KABUSHIKI KAISHA) 2 January 2002 (2002-01-02) * paragraph [0055]; claims; examples * | 1-7 | |
| P,X | EP 1 491 331 A (FUJI PHOTO FILM CO., LTD) 29 December 2004 (2004-12-29) * paragraph [0159] - paragraph [0210]; claims; examples * | 1-7 | |
| | | | TECHNICAL FIELDS SEARCHED (IPC) |
| X | PATENT ABSTRACTS OF JAPAN vol. 2002, no. 09, 4 September 2002 (2002-09-04) & JP 2002 146245 A (DAINIPPON INK & CHEM INC), 22 May 2002 (2002-05-22) * abstract * | 1-7 | C09D |
| X | PATENT ABSTRACTS OF JAPAN vol. 2003, no. 12, 5 December 2003 (2003-12-05) & JP 2003 270839 A (RICOH CO LTD), 25 September 2003 (2003-09-25) * abstract * | 1-7 | |

-/--

The present search report has been drawn up for all claims

1

| Place of search | Date of completion of the search | Examiner |
|---|---|---|
| Munich | 22 December 2005 | Schmitz, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 05 02 2870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 007, no. 031 (M-192), 8 February 1983 (1983-02-08) & JP 57 185195 A (NIPPON DENKI KK), 15 November 1982 (1982-11-15) * abstract * ----- | 1-7 | |
| X | PATENT ABSTRACTS OF JAPAN vol. 1997, no. 11, 28 November 1997 (1997-11-28) & JP 09 183934 A (CANON INC), 15 July 1997 (1997-07-15) * abstract * ----- | 1-7 | |
| X | PATENT ABSTRACTS OF JAPAN vol. 1999, no. 04, 30 April 1999 (1999-04-30) & JP 11 005933 A (HITACHI MAXELL LTD), 12 January 1999 (1999-01-12) * abstract * ----- | 1-7 | |
| | | | TECHNICAL FIELDS SEARCHED (IPC) |

The present search report has been drawn up for all claims

| Place of search | Date of completion of the search | Examiner |
|---|---|---|
| Munich | 22 December 2005 | Schmitz, V |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 02 2870

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2005

| Patent document cited in search report | Publication date | Patent family member(s) | Publication date |
|---|---|---|---|
| EP 1367102 A | 03-12-2003 | JP 2004002501 A | 08-01-2004 |
| | | US 2003225188 A1 | 04-12-2003 |
| WO 03093377 A | 13-11-2003 | CN 1649974 A | 03-08-2005 |
| | | EP 1502935 A1 | 02-02-2005 |
| | | US 2005119363 A1 | 02-06-2005 |
| US 5713988 A | 03-02-1998 | AT 189827 T | 15-03-2000 |
| | | AU 708495 B2 | 05-08-1999 |
| | | AU 4472196 A | 03-07-1996 |
| | | BR 9510058 A | 16-06-1998 |
| | | CA 2207427 A1 | 20-06-1996 |
| | | CN 1175271 A | 04-03-1998 |
| | | CZ 9701844 A3 | 15-07-1998 |
| | | DE 69515129 D1 | 23-03-2000 |
| | | DE 69515129 T2 | 28-09-2000 |
| | | DK 797635 T3 | 31-07-2000 |
| | | EG 21020 A | 30-09-2000 |
| | | EP 0797635 A2 | 01-10-1997 |
| | | ES 2145326 T3 | 01-07-2000 |
| | | HK 1003648 A1 | 12-01-2001 |
| | | HU 77809 A2 | 28-08-1998 |
| | | IL 116378 A | 29-05-2003 |
| | | JP 10510864 T | 20-10-1998 |
| | | NO 972734 A | 11-08-1997 |
| | | NZ 298989 A | 28-01-2000 |
| | | PL 320729 A1 | 27-10-1997 |
| | | RO 117800 B1 | 30-07-2002 |
| | | SI 9520128 A | 30-04-1998 |
| | | WO 9618694 A2 | 20-06-1996 |
| EP 1167471 A | 02-01-2002 | AU 5400201 A | 03-01-2002 |
| | | CN 1332209 A | 23-01-2002 |
| | | TW 512097 B | 01-12-2002 |
| | | US 2002036677 A1 | 28-03-2002 |
| EP 1491331 A | 29-12-2004 | JP 2005017352 A | 20-01-2005 |
| | | US 2004259033 A1 | 23-12-2004 |
| JP 2002146245 A | 22-05-2002 | NONE | |
| JP 2003270839 A | 25-09-2003 | NONE | |
| JP 57185195 A | 15-11-1982 | NONE | |
| JP 09183934 A | 15-07-1997 | JP 2862518 B2 | 03-03-1999 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 05 02 2870

This annex lists the patent family members relating to the patent documents cited in the above-mentioned European search report. The members are as contained in the European Patent Office EDP file on
The European Patent Office is in no way liable for these particulars which are merely given for the purpose of information.

22-12-2005

| Patent document cited in search report | Publication date | Patent family member(s) | Publication date |
|---|---|---|---|
| JP 11005933 A | 12-01-1999 | NONE | |

EPO FORM P0459

For more details about this annex : see Official Journal of the European Patent Office, No. 12/82